# EUROPEAN PATENT APPLICATION

(11) **EP 1 364 725 A1**
(43) Date of publication of application: **26.11.2003**
(21) Application number: 03380094.7
(22) Date of filing: 14.04.2003
(51) Int. Cl.: B21D 39/03, A21B 3/13

(54) **Fastening device for bread-making trays**

(30) Priority: 20.05.2002 ES 200201139
(71) Applicant: Carpinteria Metalica Bengolea, S.L., 48903 Retuerto-Barakaldo (Bizkaia) (ES)
(72) Inventor: Dones Arino, Elogio, 48903 Retuerto- Barakaldo (Bizkaia) (ES)
(74) Representative: Canadell-Isern, Roberto

(57) **Abstract**

FASTENING DEVICE FOR BREAD-MAKING TRAYS, intended to ensure the joining of the perforated plate to its frame and a reinforcement strip, characterized basically by the fact it includes a number of union points of the plate (1) and frame (2) in multiple zones of the periphery of the set. Each one is made up of a projection (3) with an edge (5) of the plate housed in a recess (4) with a widening (6) of the frame without having to drill or rivet (figure 4).

## Description

The purpose of this request for Patent is a fastening device for bread-making trays that provides for the function for which it is intended various advantages to be detailed later on, apart from others inherent to its organization and constitution.

Said device refers to a system for fastening the perforated plate forming the carrying part of the trays to the frame that gives them consistence.

### HISTORY

At present and as a reference to the state-of-the-art, it should be mentioned the bread-making trays include, in one of their more frequent versions, riveting of the plate to the frame and the inclusion of a handling and protection strip.

This system is costly as it requires, firstly, the making of orifices and placing of rivets and then welding for fastening the strip.

### SUMMARIZED DESCRIPTION OF THE INVENTION

The fastening device for bread-making trays, purpose of this invention, has anticipated making joint grooves in the frame and plate, without drilling or riveting and without welding at the end. In order to do this, a pre-frame and strips with characteristic section shapes are used, the coupling of which is made in a simple mechanical way and with a very resistant result.

In order to complement the description which follows and to help with a better understanding of the characteristics of the invention, this descriptive report includes a set of drawings in which the most significant details are represented in an illustrative but not limiting way.

### BRIEF DESCRIPTION OF THE DRAWINGS

Figure 1 shows the shape of the profile for constructing the tray frames.
Figures 2 and 3 show the shape of the profile of the strips applied to the tray edges.
Figure 4 shows the how the plate and frame are coupled or sown with rivets.

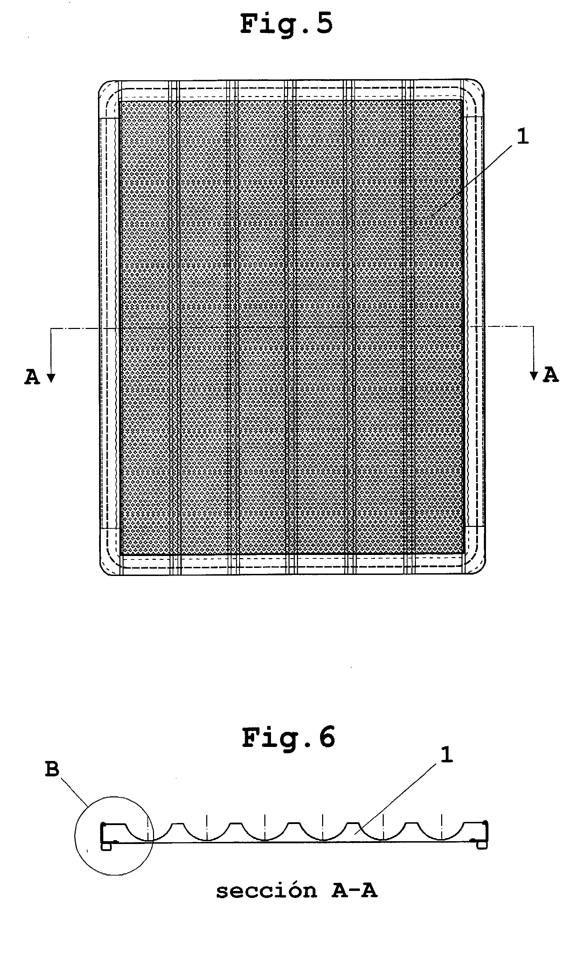

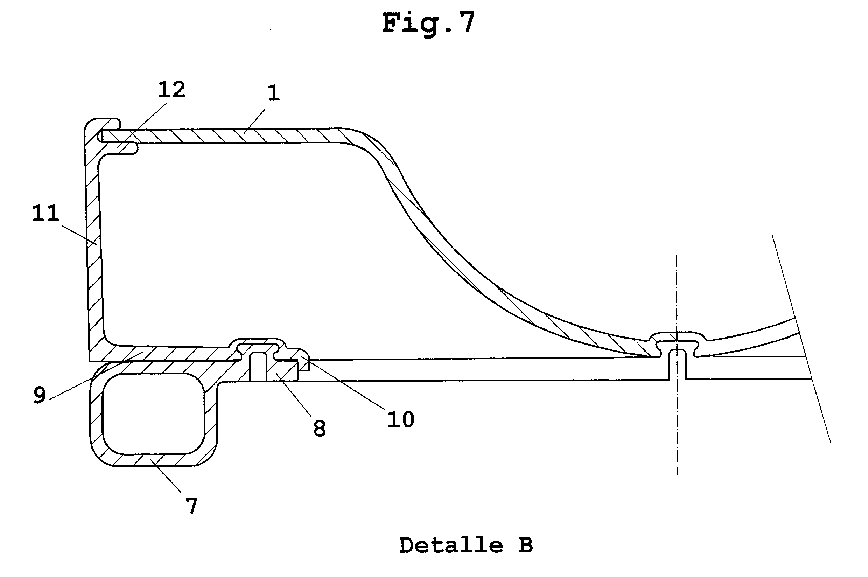

Figures 5, 6 and 7 show views of the tray set, a section indicated as A-A in figure 5 and a detail indicated as B in figure 6 corresponding to the profile of figure 2.

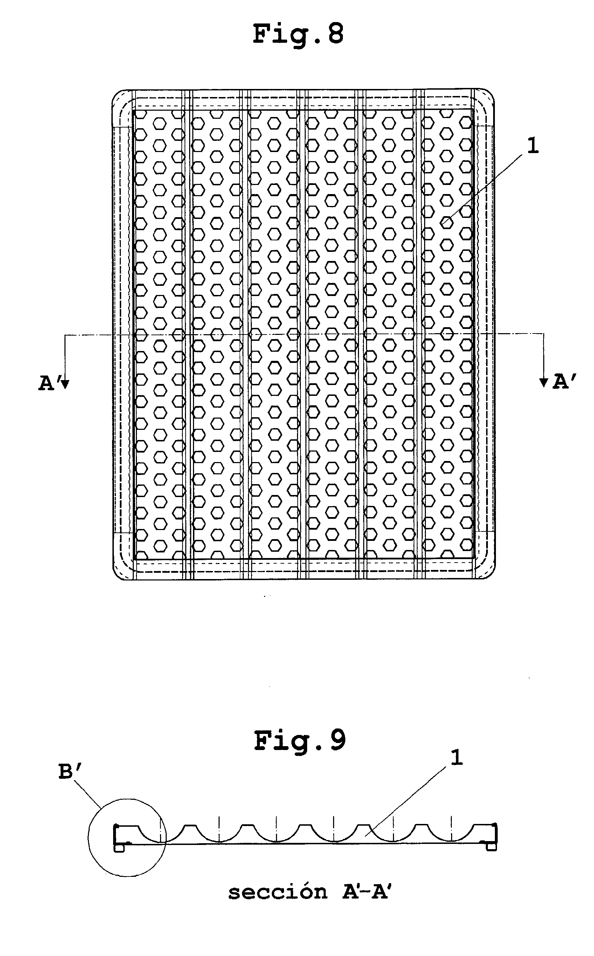

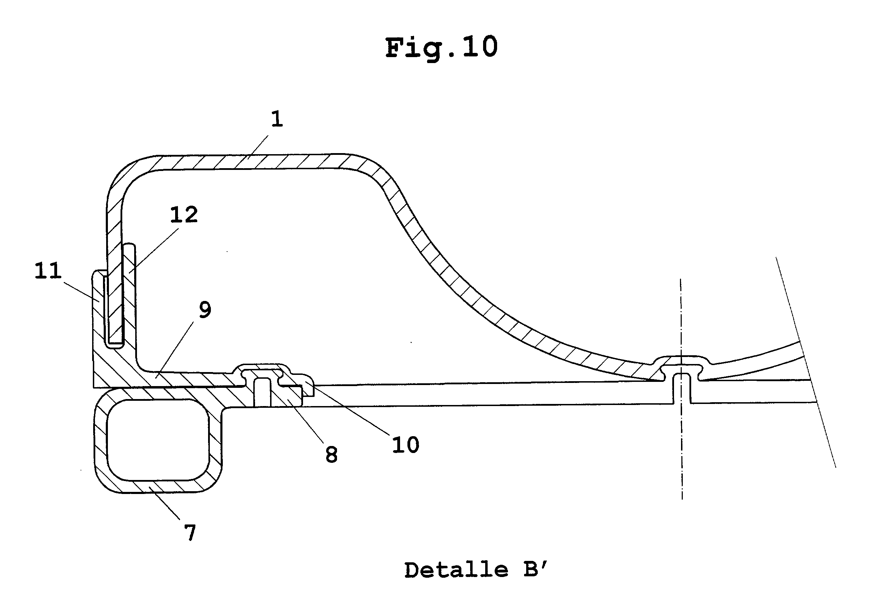

Figures 8, 9 and 10 show views of the tray set, a section indicated as A'-A' in figure 8 and a detail indicated as B' in figure 9 corresponding to the profile of figure 3.

### PERFORMANCE EXAMPLE DESCRIPTION OF THE INVENTION

In view of the figures commented above and in accordance with the numbering used, a illustrative but not limiting example of the invention can be seen. This consists of a fastening device for bread-making trays in which the perforated plate -1- with traditional characteristics is joined along its edges to the frame -2- and the joint is ensured, in different zones of the periphery of both elements, by corresponding grooves: the projecting one -3- in the shape of a button on the plate that is inserted into the recess -4- of the frame.

The relative immobilization of the two mentioned elements is ensured by a peripheral edge -5- of the plate projection and the annular widening -6- in the frame recess.

In this way drilling of both elements to house rivets is avoided, as well as inserting said rivets in the orifices.

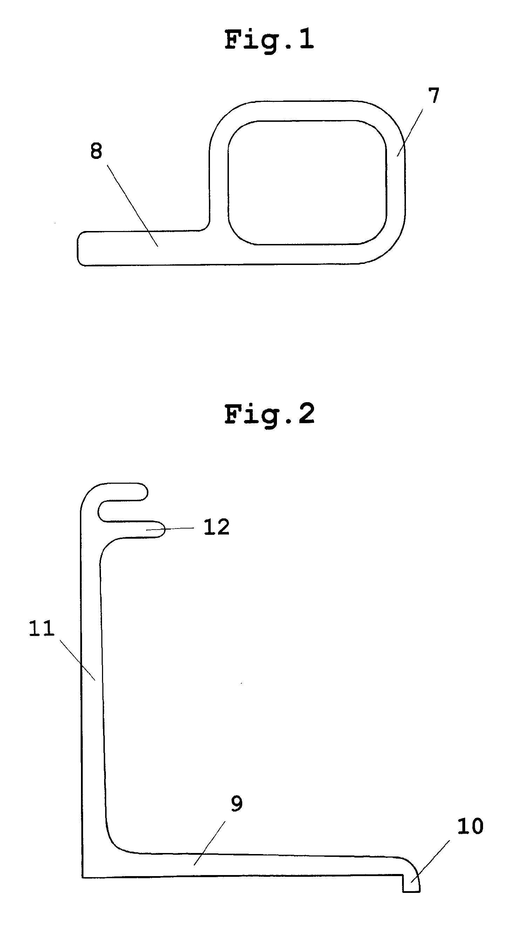

A pre-frame is used that has its section in the shape of "b" or "p" (figure 1) with its tubular part -7- and lateral part -8- a rectilinear section.

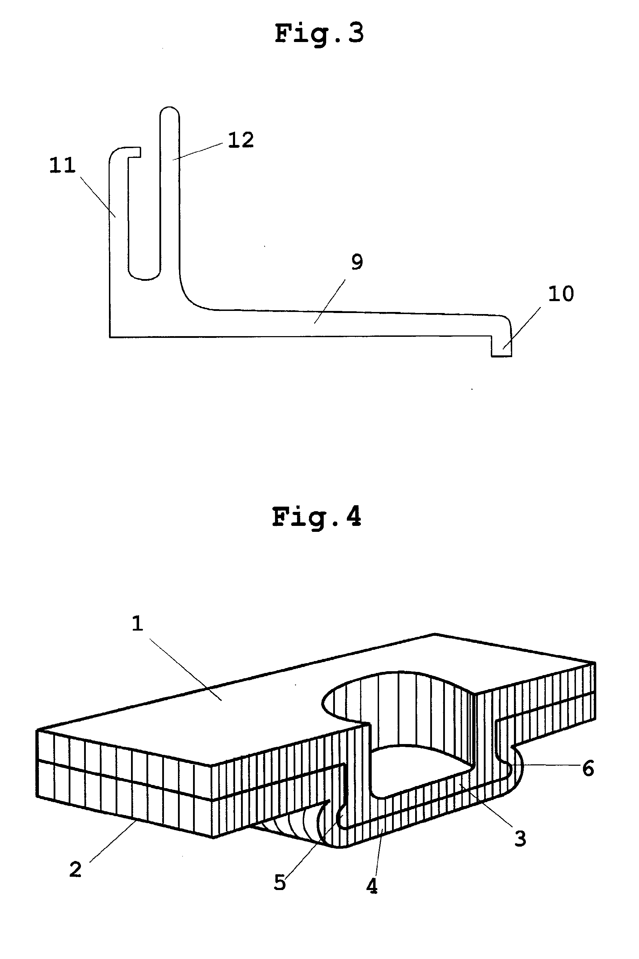

Finally, the strip is incorporated (one with the section of figure 2 or figure 3) and is fastened without having to carry out welding.

Each of the two types of strip is made up of a straight angle, with a side - 9- and edge -10- and the other side -11- with a projection -12- making up a pressing system.

## Claims

1. FASTENING DEVICE FOR BREAD-MAKING TRAYS, intended to ensure the joining of the perforated plate to its frame and reinforcement strip, **characterized by** the fact it includes a number of union points of the plate (1) and frame (2) in multiple zones of the periphery of the set. Each one is made up of a projection (3) with an edge (5) of the plate housed in a recess (4) with a widening (6) of the frame without having to drill or rivet.

2. FASTENING DEVICE FOR BREAD-MAKING TRAYS, according to claim 1, **characterized by** the fact it includes a reinforcement pre-frame, the section of which is a "b" shape with a tubular part (7), preferably quadrangular, and an elongated section part (8) for joining to the plate (1) edges.

3. FASTENING DEVICE FOR BREAD-MAKING TRAYS, according to claims 1 and 2, **characterized by** the fact it includes the incorporation of a straight angle section peripheral strip with one of its sides (9) forming a projecting edge (10).
